# EUROPEAN PATENT APPLICATION

(11) **EP 4 712 546 A1**
(43) Date of publication of application: **18.03.2026**
(21) Application number: 23936208.0
(22) Date of filing: 24.05.2023
(51) Int. Cl.: H04W 28/02

(54) **INFORMATION INDICATION METHOD AND APPARATUS, COMMUNICATION DEVICE, AND STORAGE MEDIUM**

(30) Priority: 11.05.2023 WO PCT/CN2023/093707
(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); LI, Lisi, Beijing 100085 (CN)
(74) Representative: Stöckeler, Ferdinand
(86) International application number: PCT/CN2023/096144
(87) International publication number: WO 2024/229895

(57) **Abstract**

Embodiments of the present disclosure provide an information indication method and apparatus, a communication device, and a storage medium. The information indication method comprises: on the basis of first information, a fourth network device determines PSI related to an independent PDU, so that the fourth network device or other network devices can determine independent PDU -related processing on the basis of PDU set information. In this way, the reliability of processing associated with a PDU can be improved.

## Description

This application claims the benefit of priority to International Application No. PCT/CN2023/093707, filed on May 11, 2023, and titled with "INFORMATION INDICATION METHOD AND APPARATUS, COMMUNICATION DEVICE, AND STORAGE MEDIUM".

### TECHNICAL FIELD

The present disclosure relates to but is not limited to the field of wireless communication technology, and in particular to a method for indicating information, an apparatus, a communication device and a storage medium.

### BACKGROUND

With the development of wireless networks, wireless communication systems adopt Quality of Service (QoS) mechanisms. Extended reality and media (XRM) services and interactive media services may comprehensively consider QoS characteristics of data flows relevant to the services. In an application scenario, a function of processing each protocol data unit (PDU) set of XRM service data flows is enhanced to support QoS perception and guarantee enhancement and quality of experience (QoE) enhancement of XRM service data flows. However, for some PDUs, due to the lack of sufficient information, there is uncertainty in the processing related to these PDUs, and required QoS guarantee and user QoE cannot be provided for the relevant data flows.

### SUMMARY

Embodiments of the present disclosure provides a method and an apparatus for indicating information, a communication device, and a storage medium.

According to a first aspect of the embodiments of the present disclosure, a method for indicating information is provided. The method is performed by a first network device, and the method includes: sending first information to a second network device or a fourth network device.

The first information first information indicates a packet data unit set importance (PSI) related to an alone packet data unit (PDU), and the alone PDU is a PDU that does not carry an extension header for a PDU set or a PDU that cannot be mapped into a PDU set.

According to a second aspect of the embodiments of the present disclosure, a method for indicating information is provided. The method is performed by a second network device, and the method includes:
receiving first information sent from a first network device.

The first information first information indicates a PSI related to an alone packet data unit (PDU), and the alone PDU is a PDU that does not carry an extension header for a PDU set or a PDU that cannot be mapped into a PDU set.

According to a third aspect of the embodiments of the present disclosure, a method for indicating information is provided. The method is performed by a third network device, and the method includes:
receiving first information sent from a second network device.

The first information first information indicates a PSI related to an alone packet data unit (PDU), and the alone PDU is a PDU that does not carry an extension header for a PDU set or a PDU that cannot be mapped into a PDU set.

According to a fourth aspect of the embodiments of the present disclosure, a method for indicating information is provided. The method is performed by a fourth network device, and the method includes:
receiving first information sent from a first network device or a third network device.

The first information first information indicates a PSI related to an alone packet data unit (PDU), and the alone PDU is a PDU that does not carry an extension header for a PDU set or a PDU that cannot be mapped into a PDU set.

According to a fifth aspect of the embodiments of the present disclosure, a system is provided. The system includes: a first network device, a second network device, a third network device and a fourth network device; in which the first network device is configured to execute any of the method performed by the first network device; the second network device is configured to execute any of the method performed by the second network device; the third network device is configured to execute any of the method performed by the third network device; and the fourth network device is configured to execute any of the method performed by the fourth network device.

According to a sixth aspect of the embodiments of the present disclosure, an apparatus for indicating information is provided. The apparatus includes:
a sending module, configured to send the first information to a second network device or a fourth network device.

The first information first information indicates a PSI related to an alone packet data unit (PDU), and the alone PDU is a PDU that does not carry an extension header for a PDU set or a PDU that cannot be mapped into a PDU set.

According to a seventh aspect of the embodiments of the present disclosure, an apparatus for indicating information is provided. The apparatus includes:
a receiving module, configured to receive first information sent from a first network device.

The first information first information indicates a PSI related to an alone packet data unit (PDU), and the alone PDU is a PDU that does not carry an extension header for a PDU set or a PDU that cannot be mapped into a PDU set.

According to an eighth aspect of the embodiments of the present disclosure, an apparatus for indicating information is provided. The apparatus includes:
a receiving module, configured to receive first information sent from a second network device.

The first information first information indicates a PSI related to an alone packet data unit (PDU), and the alone PDU is a PDU that does not carry an extension header for a PDU set or a PDU that cannot be mapped into a PDU set.

According to a ninth aspect of the embodiments of the present disclosure, an apparatus for indicating information is provided. The apparatus includes:
a receiving module, configured to receive first information sent from a first network device or a third network device;
The first information first information indicates a PSI related to an alone packet data unit (PDU), and the alone PDU is a PDU that does not carry an extension header for a PDU set or a PDU that cannot be mapped into a PDU set.

According to a tenth aspect of the embodiments of the present disclosure, a method for indicating information is provided.

According to an eleventh aspect of the embodiments of the present disclosure, a communication device is provided, the communication device including:
a processor; and
a memory for storing instructions executable by the processor.

The processor is configured to implement the method described in any embodiment of the present disclosure when running the executable instructions.

According to a twelfth aspect of the embodiments of the present disclosure, a computer storage medium is provided. The computer storage medium stores a computer executable program, and when the executable program is executed by a processor, the method described in any embodiment of the present disclosure is implemented.

In embodiments of the present disclosure, the first information is used to indicate the PSI related to the alone PDU, and the alone PDU is a PDU that does not carry an extension header for a PDU set or cannot be mapped into a PDU set. The first network device sends the first information indicating the PSI related to the alone PDU to the second network device or the fourth network device. Thus, after the second network device or the fourth network device receives the first information, the second network device or the fourth network device can determine PDU set information corresponding to the alone PDU based on the first information. Compared with a situation where the PDU set information corresponding to the alone PDU cannot be determined, a processing related to the alone PDU can be determined based on the PDU set information. In this way, the reliability of the processing related to the PDU can be improved, and the required Quality of Service (QoS) guarantee and user quality of experience (QoE) can be provided for the related data flows.

### BRIEF DESCRIPTION OF THE DRAWINGS

FIG. 1 is a schematic diagram of a wireless communication system according to an embodiment of the present disclosure.
FIG. 2 is a flow chart of a method for indicating information according to an embodiment of the present disclosure.
FIG. 3 is a flow chart of a method for indicating information according to an embodiment of the present disclosure.
FIG. 4 is a flow chart of a method for indicating information according to an embodiment of the present disclosure.
FIG. 5 is a flow chart of a method for indicating information according to an embodiment of the present disclosure.
FIG. 6 is a flow chart of a method for indicating information according to an embodiment of the present disclosure.
FIG. 7 is a flow chart of a method for indicating information according to an embodiment of the present disclosure.
FIG. 8 is a flow chart of a method for indicating information according to an embodiment of the present disclosure.
FIG. 9 is a flow chart of a method for indicating information according to an embodiment of the present disclosure.
FIG. 10 is a flow chart of a method for indicating information according to an embodiment of the present disclosure.
FIG. 11 is a flow chart of a method for indicating information according to an embodiment of the present disclosure.
FIG. 12 is a flow chart of a method for indicating information according to an embodiment of the present disclosure.
FIG. 13 is a flow chart of a method for indicating information according to an embodiment of the present disclosure.
FIG. 14 is a flow chart of a method for indicating information according to an embodiment of the present disclosure.
FIG. 15 is a flow chart of a method for indicating information according to an embodiment of the present disclosure.
FIG. 16 is a flow chart of a method for indicating information according to an embodiment of the present disclosure.
FIG. 17 is a flow chart of a method for indicating information according to an embodiment of the present disclosure.
FIG. 18A is a flow chart of a method for indicating information according to an embodiment of the present disclosure.
FIG. 18B is a flow chart of a method for indicating information according to an embodiment of the present disclosure.
FIG. 19 is a schematic diagram of a system for indicating information according to an embodiment of the present disclosure.
FIG. 20 is a block diagram of an apparatus for indicating information according to an embodiment of the present disclosure.
FIG. 21 is a block diagram of an apparatus for indicating information according to an embodiment of the present disclosure.
FIG. 22 is a block diagram of an apparatus for indicating information according to an embodiment of the present disclosure.
FIG. 23 is a block diagram of an apparatus for indicating information according to an embodiment of the present disclosure.
FIG. 24 is a block diagram of a terminal according to an embodiment of the present disclosure.
FIG. 25 is a block diagram of a base station according to an embodiment of the present disclosure.

### DETAILED DESCRIPTION

Embodiments may be described in detail herein, examples of which are shown in the accompanying drawings. When the following description refers to the drawings, unless otherwise indicated, the same numbers in different drawings represent the same or similar elements. The implementations described in the following embodiments do not represent all implementations consistent with the embodiments of the present disclosure. Instead, they are merely examples of devices and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a" and "the" used in the embodiments of the present disclosure and the appended claims are also intended to include plural forms, unless the context clearly indicates other meanings. It should also be understood that the term "and/or" used herein refers to and includes any or all possible combinations of one or more associated listed items.

It should be understood that although the terms first, second, third, etc. may be configured to describe various information in the embodiments of the disclosure, the information should not be limited to these terms. These terms are only configured to distinguish the same type of information from each other. For example, without departing from the scope of the embodiments of the disclosure, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

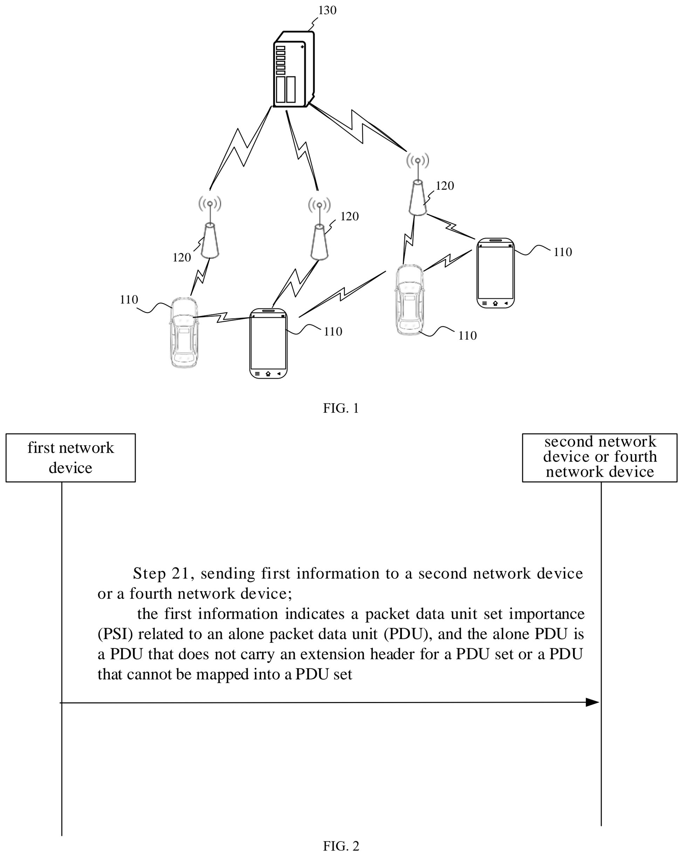

With reference to FIG. 1, FIG. 1 shows a schematic diagram of a structure of a wireless communication system provided by an embodiment of the present disclosure. As shown in FIG. 1, the wireless communication system is a communication system based on mobile communication technology, and the wireless communication system may include: a plurality of user equipment 110 (or terminal devices 110, terminals 110) and a plurality of base stations 120 (or access network devices120).

The user equipment 110 can be a device that provides voice and/or data connectivity to a user. The user equipment 110 can communicate with one or more core networks via a radio access network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device, such as a station (STA), a subscriber unit, a subscriber station, a mobile station, a mobile station, a remote station, an access point, a remote user device, an access terminal, a user terminal, a user agent, a user device, or a user equipment. Or, the user equipment 110 can also be a device of an unmanned aerial vehicle. Or, the user equipment 110 can also be a vehicle-mounted device. For example, it can be a driving computer with a wireless communication function, or a wireless user device connected to an external driving computer. Or, the user equipment 110 may also be a roadside device, such as a street lamp, a signal lamp or other roadside device with a wireless communication function.

The base station 120 may be a network device in the wireless communication system. The wireless communication system may be a fourth generation mobile communication technology (4G) system, also known as a long term evolution (LTE) system; or the wireless communication system may be a 5G system, also known as a new air interface system or a 5G new radio (NR) system. Or, the wireless communication system may be a next generation system of the 5G system. The access network in the 5G system may be referred to as an NG-RAN (New Generation-Radio Access Network).

The base station 120 can be an evolved base station (eNB) adopted in the 4G system. Or, the base station 120 can also be a base station (gNB) adopting a centralized distributed architecture in the 5G system. When the base station 120 adopts the centralized distributed architecture, it usually includes a centralized unit (CU) and at least two distributed units (DUs). The centralized unit is provided with protocol stacks of a packet data convergence protocol (PDCP) layer, a radio link layer control protocol (RLC) layer, and a media access control (MAC) layer; the distributed unit is provided with a protocol stack of a physical (PHY) layer. The implementation method of the base station 120 is not limited in the embodiments of the present disclosure.

A wireless connection may be established between the base station 120 and the user equipment 110 via a wireless air interface. In different implementations, the wireless air interface is a wireless air interface based on the fourth generation mobile communication network technology (4G) standard. Or, the wireless air interface is a wireless air interface based on the fifth generation mobile communication network technology (5G) standard, for example, the wireless air interface is a new air interface. Or, the wireless air interface may also be a wireless air interface based on the next generation mobile communication network technology standard of 5G.

In some embodiments, an E2E (End to End) connection may also be established between the user equipments 110, such as in V2V (vehicle to vehicle) communication, V2I (vehicle to Infrastructure) communication, and V2P (vehicle to pedestrian) communication in vehicle to everything (V2X) communication.

Here, the above-mentioned user equipment can be considered as a terminal of the following embodiments.

In some embodiments, the wireless communication system may further include a network management device 130.

Several base stations 120 are respectively connected to the network management device 130. The network management device 130 may be an access and mobility management function (AMF), a session management function (SMF), a user plane function (UPF), a policy control function (PCF), a network repository function (NRF), etc. The embodiments of the present disclosure do not limit the implementation form of the network management device 130.

For example, in the present disclosure, the first network device may be a first network function, which is an application function (AF); the second network device may be a second network function, which may be a policy control function (PCF); the third network device may be a third network function, which may be a session management function (SMF); the fourth network device may be a fourth network function, which may be a user plane function (UPF). The network function may also be other evolved network functions, which are not limited here.

The terminal involved in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap (reduced capability) terminal or a predetermined version of a new radio (NR) terminal (for example, an R17 NR terminal).

The access network device involved in the present disclosure may be a base station, and the base station may be various types of base stations, such as a base station of a third generation mobile communication (3G) network, a base station of a fourth generation mobile communication (4G) network, a base station of a fifth generation mobile communication (5G) network, or other evolved base stations.

In order to facilitate the understanding of those skilled in the art, embodiments of the present disclosure list multiple implementations to clearly illustrate the technical solutions of embodiments of the present disclosure. Those skilled in the art can understand that the multiple embodiments provided by embodiments of the present disclosure can be executed separately, or can be executed together with the methods of other embodiments of the embodiments of the present disclosure, or can be executed together with some methods in the related art separately or in combination; and embodiments of the present disclosure do not limit this.

In order to better understand the technical solutions described in any embodiment of the present disclosure, application scenarios in the related art are described first.

Mobile media services, cloud augmented reality (AR) or virtual reality (VR) and other extended reality (XR) services, cloud gaming, video-based machine or drone remote control services are expected to contribute increasing traffic to 5G networks.

In addition to audio and video flows, XR services also involve multimodal data flows, such as data flows for biological tactile perception. The multimodal data are data input from the same device or different devices (including sensors) that describe the same service or application, and the data may be output to one or more destination device terminals. The data flows in multimodal data often have a certain or even strong correlation, such as the synchronization of audio and video flows, and the synchronization of touch and vision. Common characteristics exist in the data flows of this type of media services, exist between the various data flows, and exist in network transmission requirements of these service data flows. The effective identification and utilization of these characteristics may be conducive to the transmission and control of the network and services, and may be conducive to service assurance and user experience.

Extended Reality and Media (XRM) services and interactive media services require the 5GS system to comprehensively consider quality of service (QoS) characteristics of the service-related data flow, such as whether parameters such as delay critical guaranteed bit rate (GBR) data flow, guaranteed flow bit rate (GFBR), packet delay budget (PDB), and default maximum data burst volume (MDBV) can be met and coordinated at the same time. This involves consistency guarantee of QoS authorization and execution for multiple XRM data flows of a UE and XRM data flows of multiple UEs.

In an embodiment, the current 5G system supports AF's enhanced function of processing each protocol data unit (PDU) set of XRM service data flow, to support AF to enhance QoS perception and guarantee of XRM service data flow, as well as enhanced QoE of users. This includes: AF providing PDU set-specific QoS characteristics and protocol descriptions; PDU set delay budget (PSDB); PDU set error rate (PSER); PDU set integrated handling information (PSIHI).

In an embodiment, the session management function (SMF) and the user plane function (UPF) may perform general packet radio service tunneling protocol user plane (GTP-U) header extension of a corresponding PDU in a corresponding service data flow (SDF) PDU set based on the protocol description and protocol header extension provided by the application function (AF), and the extended PDU carries PDU set information. The NG-RAN uses PDU set information to perform QoS processing based on a PDU set. The PDU set information includes at least one of the following: a PDU set sequence number, an end PDU indicating the PDU set (or the last PDU of ordered PDUs in the PDU set), a PDU sequence number in the PDU set, a PDU set size (in bytes), and a PDU set importance, in which the PDU set importance identifies relative importance of a PDU set relative to other PDU sets in a QoS flow.

In an embodiment, the UPF may perform the mapping of AF SDF service data flow to a QoS flow based on a packet detection rule (PDR) rule, encapsulate the associated PDUs into PDU set; and execute relevant set-related QoS policies such as PSER and PSDB on the PDU set in the QoS flow. However, 5GS has no solution for how to handle non-media group classified PDUs in the application service data flow (SDF), resulting in potential conflicts between the QoS profile and a parameter execution policy of the QoS flow, and the QoS of the QoS flow cannot be guaranteed.

In an embodiment, the UPF maps the application flow to the QoS flow based on packet detection information in the PDR. Some PDUs in the QoS flow may be associated with media components (e.g., I frames and P frames), and the PDUs may be classified by the UPF as belonging to a certain PDU set, and corresponding processing can be performed on the classified PDUs and/or the corresponding PDU set, such as packet dropping processing. However, it is not clear how to handle PDUs that do not contain identifiable user media components. In particular, it is unclear how to mark the PDU set information of these PDUs without header extension. For example, after receiving a PDU that does not contain an identifiable user media component, the RAN cannot clearly determine how to process the PDU when performing packet dropping processing.

As shown in FIG. 2, this embodiment provides a method for indicating information, the method is executed by a first network device, and the method includes step 21.

Step 21, first information is sent to a second network device or a fourth network device.

The first information indicates a PDU set importance (PSI) related to an alone PDU, and the alone PDU is a PDU that does not carry an extension header for a PDU set or a PDU that cannot be mapped into a PDU set

In an embodiment, the alone PDU is determined or identified; the PSI related to the alone PDU is generated; and the first information is sent to the second network device or the fourth network device. The first information is used to indicate the PSI related to the alone PDU, and the alone PDU is a PDU that does not carry an extension header for a PDU set or cannot be mapped into a PDU set.

In an embodiment, the first network device may generate a PSI of a non-alone PDU (which may be a PDU other than alone PDUs), such as a first-type PSI, and the second network device may generate a PSI of an alone PDU, such as a second-type PSI. The first-type PSI may be distinguished from the second-type PSI. For example, the first-type PSI is a PSI of a first format, and the second-type PSI is a PSI of a second format. In this way, the network device receiving the first information may determine whether the PSI is a PSI of a non-alone PDU or a PSI of an alone PDU based on the type of PSI.

In the present disclosure, the PDU may also be a packet data unit. That is, in some scenarios, "packet data unit" and "protocol data unit" in the present disclosure may be interchangeable.

In an embodiment, the PSI is used to indicate the relative importance of a PDU set relative to other PDU sets in the QoS flow. Different PSI values can be set based on the importance of the PDU set related to the alone PDU, and the first information can directly indicate the PSI value related to the alone PDU.

The alone PDU does not carry the extension header for the PDU set, so the alone PDU cannot be classified into a PDU set by an RAN. When the RAN processes the PDU set (for example, drops it), it cannot clearly determine whether to perform the corresponding processing operation on the alone PDU. In addition, even if the PDU carries the extension header for the PDU set, if the PDU cannot be mapped into the PDU set due to the lack of specific information, it may not be clear whether to perform the corresponding processing operation when the RAN processes the PDU set (for example, drops it).

In an embodiment, the PDU set associated with the alone PDU is a PDU set encapsulated based on alone PDUs.

In an embodiment, the first information is sent to the second network device or the fourth network device. The first information is used to indicate a PSI related to an alone PDU; and the first information is used to determine PDU set information that corresponds to the alone PDU and is sent to a fifth network device. For example, the first information is used to determine the PDU set information sent to the fifth network device in a general packet radio service tunneling protocol user plane (GTP-U) header corresponding to the alone PDU. For example, the fifth network device may be a RAN device.

In an embodiment, the first network device sends the first information to the second network device (or the first network device sends the first information to the second network device through a network exposure function (NEF)).

In an embodiment, the first network device sends a real-time transport protocol (RTP) service data flow (SDF) where the alone PDU is located and/or a real-time transport control protocol (RTCP) SDF related to the alone PDU to the second network device. The RTCP SDF and/or the RTP SDF carries the first information. The first information is used to indicate the PSI related to an alone PDU, and the alone PDU is a PDU that does not carry a PDU set extension header or cannot be mapped into a PDU set; the first information is used to determine the PDU set information that corresponds to the alone PDU and is sent to the RAN.

In an embodiment, the first information is sent to the second network device when the first network device executes a session creating request procedure, the first information is used to indicate a PSI related to an alone PDU, and the alone PDU is a PDU that does not carry a PDU set extension header or cannot be mapped into a PDU set. The first information is used to determine the PDU set information that corresponds to the alone PDU and is sent to the fifth network device.

In an embodiment, the first information is sent to the second network device when the first network device executes an application session update request procedure, the first information is used to indicate a PSI related to an alone PDU, and the alone PDU is a PDU that does not carry a PDU set extension header or cannot be mapped into a PDU set. The first information is used to determine the PDU set information that corresponds to the alone PDU and is sent to the fifth network device.

In an embodiment, the first information is sent to the second network device when executing a QoS processing procedure based on the PDU set, the first information is used to indicate a PSI related to an alone PDU, and the alone PDU is a PDU that does not carry a PDU set extension header or cannot be mapped into a PDU set. The first information is used to determine the PDU set information corresponding to the alone PDU sent to the RAN.

In embodiments of the present disclosure, the second network device and the fourth network device can determined the PDU set importance because the first network device sends the first information indicating the PSI related to the alone PDU to the second network device or the fourth network device. In this way, after the second network device or the fourth network device receives the first information, the second network device or the fourth network device can determine the PDU set information corresponding to the alone PDU based on the first information (the PDU set information includes the PSI information). Compared with a situation where the PDU set information corresponding to the alone PDU cannot be determined, a processing related to the alone PDU can be determined based on the PDU set information. In this way, the reliability of the processing related to the PDU can be improved, and the required QoS guarantee and user QoE can be provided for the related data flows.

It should be noted that those skilled in the art can understand that the method provided in embodiments of the present disclosure can be executed alone or together with some methods in the embodiments of the present disclosure or some methods in the related art.

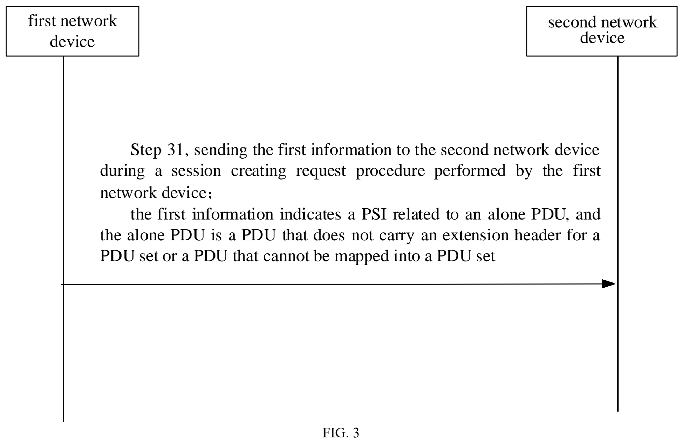

As shown in FIG. 3, this embodiment provides a method for indicating information, the method is executed by a first network device, and the method includes step S31.

Step 31, first information is sent to a second network device during a session creating request procedure executed by the first network device.

The first information is used to indicate a PSI related to an alone PDU, where the alone PDU is a PDU that does not carry a PDU set extension header or cannot be mapped into a PDU set.

In an embodiment, the first network device may determine the PSI of the alone PDU based on the importance of a PDU service.

In an embodiment, the first network device may customize the PSI of the alone PDU or determine the PSI of the alone PDU based on a user instruction.

In an embodiment, the first information is sent to the second network device during the session creating request procedure performed by the first network device. The first information is used to indicate the PSI related to the alone PDU, the alone PDU is a PDU that does not carry a PDU set extension header or cannot be mapped into a PDU set, and the first information is used to determine PDU set information that corresponds to the alone PDU and is sent to the RAN.

In order to better understand embodiments of the present disclosure, the technical solution of the present disclosure is further described below through an embodiment.

### Example 1:

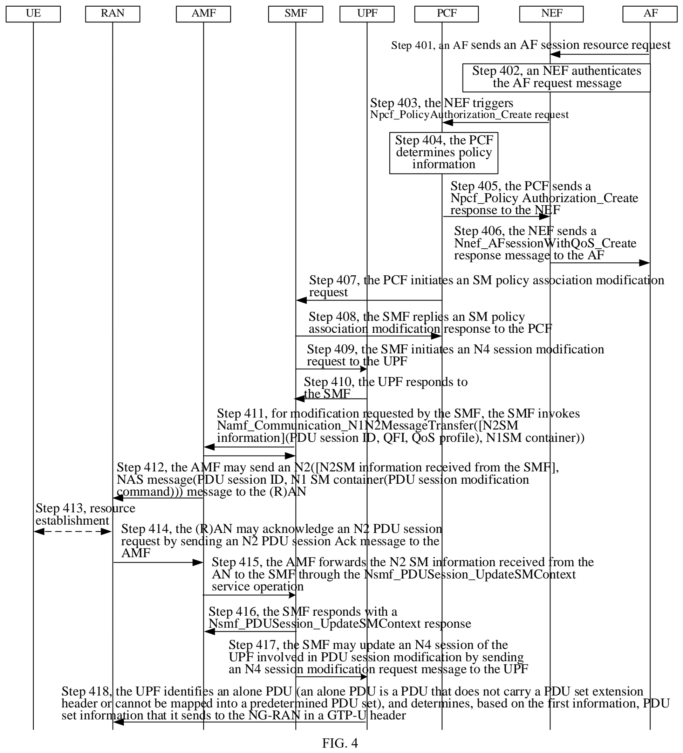

With reference to FIG. 4, a method for indicating information is provided, the method including steps 401-418.

Step 401, an AF sends an AF session resource request, for example, through Nnef_AFsessionWithQoS_Create request, to create an AF request message. The AF carries a QoS requirement of data flows of an XRM service and an interactive media service in the AF request message. The AF sends first information to a 5G core network (CN) (which can be an NEF or a PCF), and the first information is used to indicate a PSI related to an alone PDU. The alone PDU is a PDU that does not carry a PDU set extension header or cannot be mapped into a PDU set. The first information is used to determine PDU set information corresponding to the alone PDU sent to the RAN. The AF can send the first information to the NEF or the PCF during the AF session creating request.

In an embodiment, the AF request message may also include at least one of: XRM service information, a data flow or a data flow group identifying the XRM service (such as a multimodal service identifier), a terminal address, a terminal identifier, an AF authentication application identifier, a data flow description, a data network name (DNN), a single network slice selection assistance information (S-NSSAI) or a QoS parameter. The multimodal service identifier can be used to identify all data flows in the XRM service group.

Step 402, an NEF authenticates the AF request message. If an authentication result is that the AF is a trusted AF, the AF request message of the AF is sent to the PCF through the NEF. In an embodiment, the NEF performs relevant mappings, including mapping of the XRM service (AF-Service-Identifier) to the DNN and S-NSSAI, mapping of external applications to CN application identifiers, mapping of external UE identifiers to UE identifiers within the CN (such as Subscriber Permanent Identifier (SUPI)) based on unified data management (UDM) contract information, and mapping of external XRM service group identifiers to internal XRM service group identifiers performed based on the UDM contract information.

Step 403, the NEF authorizes the AF request and determines whether to invoke a Time sensitive communication and time synchronization function (TSCTSF) or directly contact the PCF based on a parameter provided by the AF. The PCF receives an attribute provided by the AF from the NEF or the TSCTSF. The NEF triggers Npcf_PolicyAuthorization_Create request and sends the AF request message to the PCF, carrying QoS requirement information for policy decision of the PCF. The message carries the first information of the corresponding service data flow.

Step 404, the PCF determines policy information. The PCF may determine that updated or new policy information may be sent to an SMF. The PCF considers the PSI indication provided by the AF to determine a policy and charging control (PCC) rule. The PCF sends the first information received from the AF or the NEF to the SMF according to the PCC rule.

Step 405, the PCF sends a Npcf_Policy Authorization_Create response to the NEF.

Step 406, the NEF sends a Nnef_AFsessionWithQoS_Create response message to the AF. The response message carries a result, informing the AF whether the request message is authorized.

Step 407, the PCF initiates a session management (SM) policy association modification request (PCC rule (inter-burst time)) to the SMF. After receiving the PCC rule, the SMF forwards the first information to the UPF.

Step 408, the SMF replies an SM policy association modification response to the PCF.

Step 409, the SMF initiates an N4 session modification request (carrying the first information) to the UPF.

Step 410, the UPF responds to the SMF.

Step 411, for modification requested by the SMF, the SMF invokes Namf_Communication_N1N2MessageTransfer([N2SM information](PDU session ID, QoS flow identifier (QFI), QoS profile), N1SM container)).

Step 412, the AMF may send an N2([N2SM information received from the SMF], NAS message(PDU session ID, N1 SM container(PDU session modification command))) message to the (R)AN.

Step 413, resource establishment is performed (optional).

Step 414, the (R)AN may acknowledge an N2 PDU session request by sending an N2 PDU session Ack message to the AMF.

Step 415, the AMF forwards the N2 SM information received from the AN to the SMF through the Nsmf_PDUSession_UpdateSMContext service operation.

Step 416, the SMF responds with a Nsmf_PDUSession_UpdateSMContext response.

Step 417, the SMF may update an N4 session of the UPF involved in PDU session modification by sending an N4 session modification request message to the UPF.

Step 418, the UPF identifies an alone PDU (an alone PDU is a PDU that does not carry a PDU set extension header or cannot be mapped into a predetermined PDU set), and determines, based on the first information, PDU set information (especially the PSI) that it sends to the NG-RAN in a GTP-U header.

It should be noted that those skilled in the art can understand that the method provided in the embodiments of the present disclosure can be executed alone or together with some methods in the embodiments of the present disclosure or some methods in the related art.

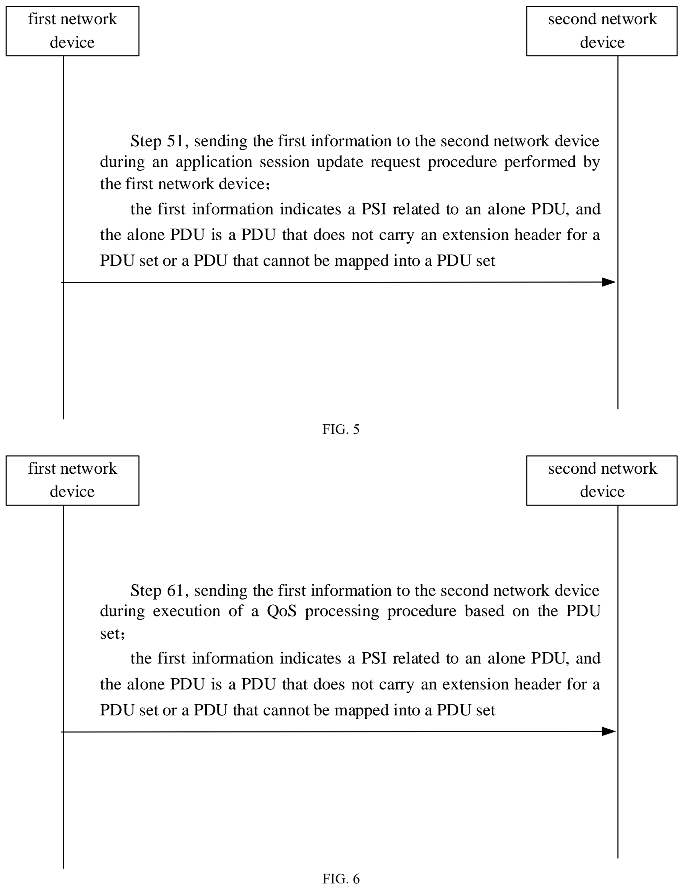

As shown in FIG. 5, this embodiment provides a method for indicating information, the method is executed by a first network device, and the method includes step 51.

Step 51, first information is sent to a second network device during an application session update request procedure performed by the first network device.

The first information is used to indicate a PSI related to an alone PDU, the alone PDU is a PDU that does not carry a PDU set extension header or cannot be mapped into a PDU set.

In an embodiment, the first network device sends the first information to the second network device during an application session update request procedure. The first information is used to indicate a PSI related to an alone PDU, the alone PDU is a PDU that does not carry a PDU set extension header or cannot be mapped into a PDU set; the first information is used to determine PDU set information corresponding to the alone PDU sent to an RAN.

It should be noted that those skilled in the art can understand that the method provided in the embodiments of the present disclosure can be executed alone or together with some methods in the embodiments of the present disclosure or some methods in the related art.

As shown in FIG. 6, this embodiment provides a method for indicating information, the method is executed by a first network device, and the method includes step 61.

Step 61, first information is sent to a second network device during execution of a QoS processing procedure based on the PDU set.

The first information is used to indicate a PSI related to an alone PDU, the alone PDU is a PDU that does not carry a PDU set extension header or cannot be mapped into a PDU set.

In an embodiment, the first network device sends the first information to the second network device during the execution of a QoS processing procedure based on the PDU set. The first information is used to indicate a PSI related to an alone PDU, the alone PDU is a PDU that does not carry a PDU set extension header or cannot be mapped into a PDU set; the first information is used to determine PDU set information corresponding to the alone PDU sent to an RAN.

In order to better understand the embodiments of the present disclosure, the technical solution of the present disclosure is further described below through an embodiment.

### Example 2:

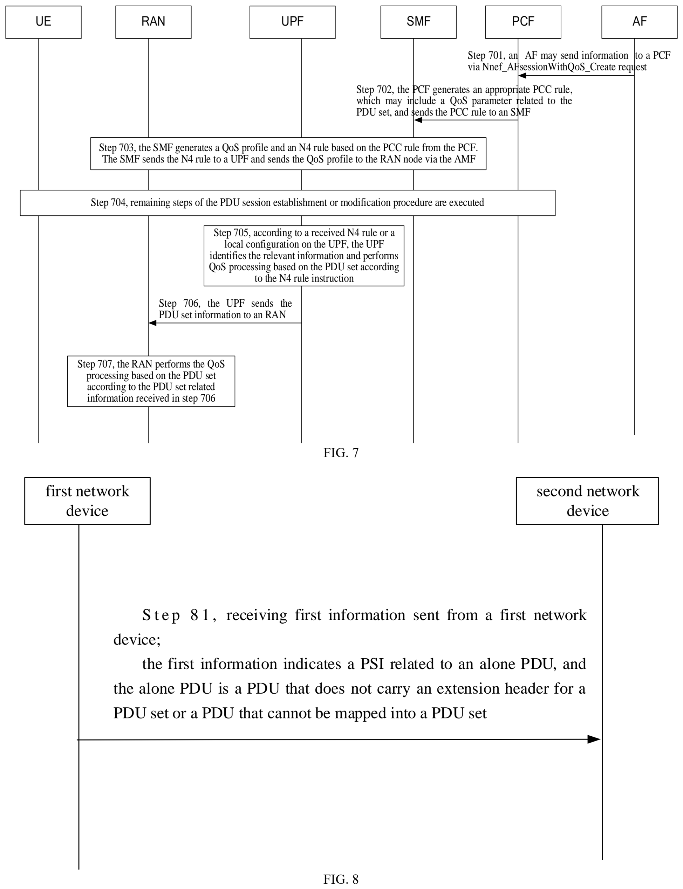

With reference to FIG. 7, a method for indicating information is provided, the method including steps 701-707.

Step 701, an AF may send information to a PCF via Nnef_AFsessionWithQoS_Create request. For example, the information sent may include a QoS parameter for each PDU set in a QoS flow and a parameter related to frame identification.

The AF may also provide the information to a 5GS prior to a PDU session is established. The AF sends an indication of a PSI to a 5GC, such as an NEF/PCF. The AF may provide the first information to the NEF/PCF during an AF QoS request procedure. The first information is used to indicate the PSI related to an alone PDU, the alone PDU is a PDU that does not carry a PDU set extension header or cannot be mapped into a PDU set; the first information is used to determine PDU set information corresponding to the alone PDU sent to the RAN.

The first information may be included in assistance information related to the PDU set, or the first information may be provided as separate information. The information sent to the PCF may include a protocol description and assistance information related to the PDU set. The assistance information related to the PDU set may include a QoS parameter for each PDU set within the QoS flow, including: a PDU set processing (handling) indication, which is used to indicate whether a processing based on the PDU set should be activated for the flow, and this indication may be implicitly indicated by other PDU set related information provided by the AF; second information used to indicate whether all PDUs are required for the usage of the PDU set by the application layer; a PDU set delay budget; and/or a PDU set error rate.

Step 702, the PCF generates an appropriate PCC rule, which may include a QoS parameter related to the PDU set, and sends the PCC rule to an SMF.

The PCF determines the PCC rule based on the first information. The PCF sends the first information received from the AF or the NEF to the SMF through the PCC rule.

The QoS parameter related to the PDU set is a new QoS parameter used for QoS processing based on the PDU set in 5GS, and may include:
a PDU set delay budget;
a PDU set error rate;
whether all PDUs are required for the usage for the PDU set by the application layer; and/or
whether to drop the PDU set when a PSDB is exceeded.

Step 703, the SMF generates a QoS profile and an N4 rule based on the PCC rule from the PCF.

The SMF sends the N4 rule to a UPF and sends the QoS profile to the RAN node via the AMF. As part of the PCC rule, the protocol description and the assistance information related to the PDU set are sent to the SMF. The SMF sends them to the NG-RAN as part of the QoS profile via the AMF. Once the PCC rule is received, the SMF forwards the first information to the UPF (e.g., via the N4 session).

Step 704, remaining steps of the PDU session establishment or modification procedure are executed.

Step 705, according to a received N4 rule or a local configuration on the UPF, the UPF identifies the relevant information and performs QoS processing based on the PDU set according to the N4 rule instruction. The UPF identifies the PDUs belonging to the PDU set and the following information of each PDU set.

The UPF identifies an alone PDU and determines a PSI of the alone PDU or PDU set information of the alone PDU based on the local configuration.

The UPF can obtain the local configuration from a UDM, a UDR, or an OAM.

The local configuration may also be referred to as the first information.

The UPF identifies the alone PDU and, taking into account the indication of the PSI, determines the PDU set information it sends to the NG-RAN in the GTP-U header (the PDU set information includes the PSI).

The PDU set information may include at least one of the following parameter information:
a PDU set sequence number (SN), in an embodiment, a QoS flow ID is used to identify a QoS flow, and a PDU set SN is used to identify each PDU set within a QoS flow. Each QoS flow can be used to deliver one or more PDU Sets;
a start/end PDU of a PDU set;
a PDU sequence number in the PDU set;
a number of PDUs in the PDU set;
PDU set importance;
PDU set size; or
end of data burst.

The UPF identifies the above parameter information through the following methods/mechanisms:
Option 1: by matching an RTP/RTCP header and a payload;
Option 2: new RTP extension header;
Option 3: based on information provided by AS in an N6 encapsulation header, such as GTP-U;
Option 4: through detection based on traffic characteristics,
Option 5: implementing UPF through a non-standardized mechanism.

Step 706, the UPF sends the PDU set information to an RAN. The UPF provides the above PDU set related information to the RAN.

Step 707, the RAN performs the QoS processing based on the PDU set according to the PDU set related information received in step 706.

It should be noted that those skilled in the art can understand that the method provided in the embodiments of the present disclosure can be executed alone or together with some methods in the embodiments of the present disclosure or some methods in the related art.

As shown in FIG. 8, this embodiment provides a method for indicating information, the method is executed by a second network device, and the method includes step 81.

Step 81, first information sent by a first network device is received.

The first information is used to indicate a PSI related to an alone PDU, the alone PDU is a PDU that does not carry a PDU set extension header or cannot be mapped into a PDU set.

In the present disclosure, the PDU may also be a packet data unit, that is, in some scenarios, the "packet data unit" and "protocol data unit" in the present disclosure may be interchangeable.

In an embodiment, the PSI is used to indicate the relative importance of a PDU set relative to other PDU sets in the QoS flow. Different PSI values can be set based on the importance of the PDU set related to the alone PDU, and the first information can directly indicate the PSI value related to the alone PDU.

The alone PDU does not carry the extension header for the PDU set, so the alone PDU cannot be classified into a PDU set by an RAN. When the RAN processes the PDU set (for example, drops it), it cannot clearly determine whether to perform the corresponding processing operation on the alone PDU. In addition, even if the PDU carries the extension header for the PDU set, if the PDU cannot be mapped into the PDU set due to the lack of specific information, it may not be clear whether to perform the corresponding processing operation when the RAN processes the PDU set (for example, drops it).

In an embodiment, the PDU set associated with the alone PDU is a PDU set encapsulated based on alone PDUs.

In an embodiment, the first information sent by the first network device is received. The first information is used to indicate a PSI related to an alone PDU; and the first information is used to determine PDU set information corresponding to the alone PDU sent to a fifth network device. For example, the first information is used to determine the PDU set information sent to the fifth network device in a GTP-U header corresponding to the alone PDU. For example, the fifth network device may be a RAN device. In an embodiment, the first network device receives the first information sent by the second network device via (or via a network exposure function (NEF)).

In an embodiment, the first network device receives the first information when the first network device executes a session creating request procedure. The first information is used to indicate a PSI related to an alone PDU, and the alone PDU is a PDU that does not carry a PDU set extension header or cannot be mapped into a PDU set; the first information is used to determine the PDU set information corresponding to the alone PDU and sent to the fifth network device.

In an embodiment, the first network device receives the first information when the first network device executes an application session update request procedure. The first information is used to indicate a PSI related to an alone PDU, and the alone PDU is a PDU that does not carry a PDU set extension header or cannot be mapped into a PDU set; the first information is used to determine the PDU set information corresponding to the alone PDU and sent to the fifth network device.

In an embodiment, the first network device receives the first information when executing a QoS processing procedure based on the PDU set, the first information is used to indicate a PSI related to an alone PDU, and the alone PDU is a PDU that does not carry a PDU set extension header or cannot be mapped into a PDU set. The first information is used to determine the PDU set information corresponding to the alone PDU sent to the RAN

In an embodiment, the first information sent by the first network device is received, the first information is used to indicate the PSI related to an alone PDU, the alone PDU is a PDU that does not carry a PDU set extension header or cannot be mapped into a PDU set. The first information is sent to a third network device.

In an embodiment, the first information sent by the first network device is received; the first information is used to indicate the PSI related to an alone PDU, and the alone PDU is a PDU that does not carry a PDU set extension header or cannot be mapped into a PDU set. A policy and charging control (PCC) rule is determined based on the first information, and the PCC rule is sent to the third network device.

It should be noted that those skilled in the art can understand that the method provided in the embodiments of the present disclosure can be executed alone or together with some methods in the embodiments of the present disclosure or some methods in the related art.

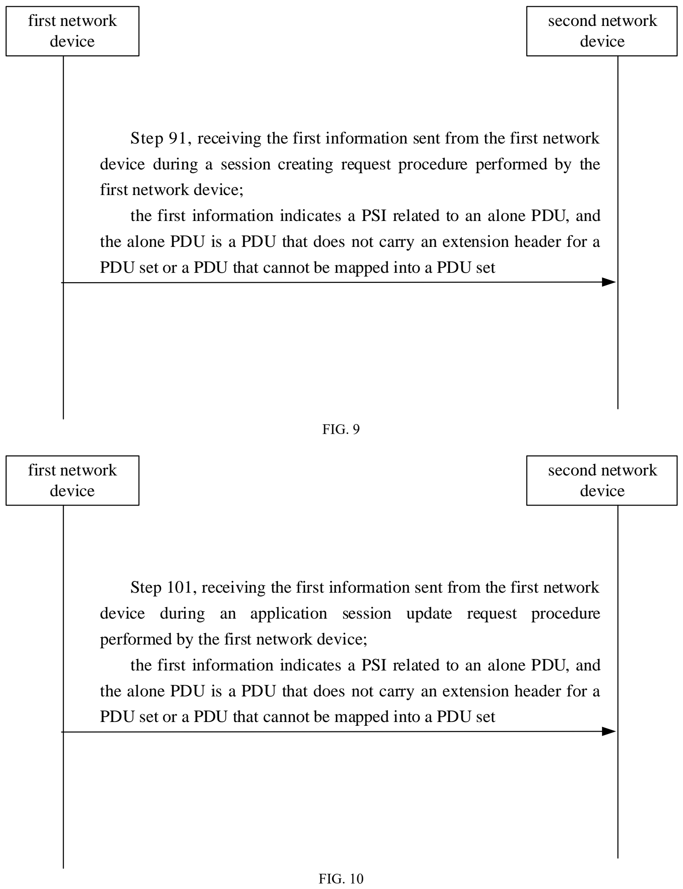

As shown in FIG. 9, this embodiment provides a method for indicating information, the method is executed by a second network device, and the method includes step 91.

Step 91, first information sent by a first network device is received during a session creating request procedure executed by the first network device.

The first information is used to indicate a PSI related to an alone PDU, where the alone PDU is a PDU that does not carry a PDU set extension header or cannot be mapped into a PDU set.

In an embodiment, the first information sent by the first network device is received during the session creating request procedure performed by the first network device. The first information is used to indicate the PSI related to the alone PDU, the alone PDU is a PDU that does not carry a PDU set extension header or cannot be mapped into a PDU set, and the first information is used to determine PDU set information that corresponds to the alone PDU and is sent to the fifth network device.

To better understand the present embodiment, reference may made to FIG. 4 again.

It should be noted that those skilled in the art can understand that the method provided in the embodiments of the present disclosure can be executed alone or together with some methods in the embodiments of the present disclosure or some methods in the related art.

As shown in FIG. 10, this embodiment provides a method for indicating information, the method is executed by a second network device, and the method includes step 101.

Step 101, first information sent by a first network device is received during an application session update request procedure performed by the first network device.

The first information is used to indicate a PSI related to an alone PDU, the alone PDU is a PDU that does not carry a PDU set extension header or cannot be mapped into a PDU set.

In an embodiment, the first information sent by the first network device is received during an application session update request procedure. The first information is used to indicate a PSI related to an alone PDU, the alone PDU is a PDU that does not carry a PDU set extension header or cannot be mapped into a PDU set; the first information is used to determine PDU set information corresponding to the alone PDU sent to a fifth network device.

It should be noted that those skilled in the art can understand that the method provided in the embodiments of the present disclosure can be executed alone or together with some methods in the embodiments of the present disclosure or some methods in the related art.

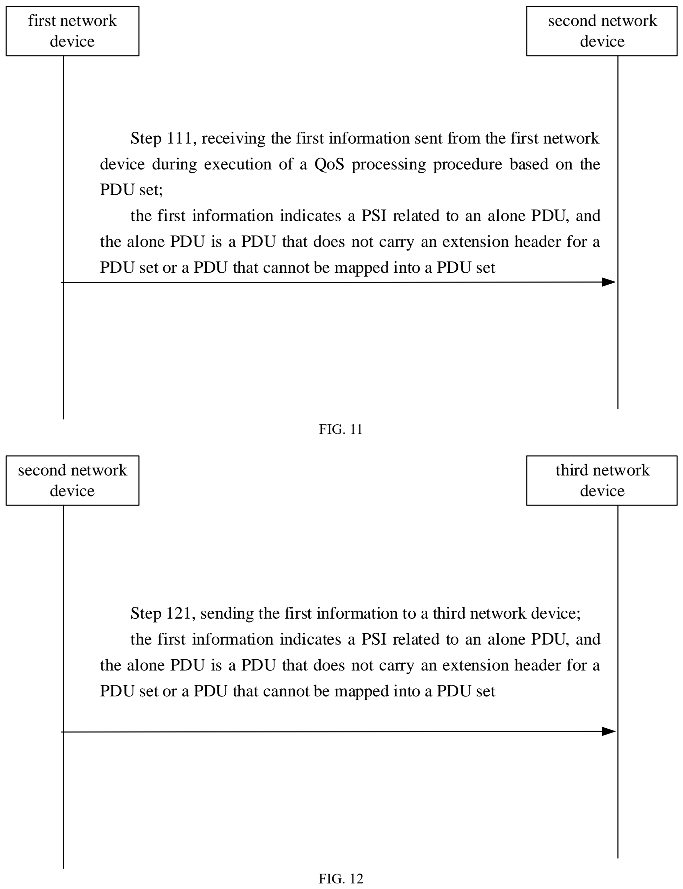

As shown in FIG. 11, this embodiment provides a method for indicating information, the method is executed by a second network device, and the method includes step 111.

Step 111, first information sent by a first network device is received during execution of a QoS processing procedure based on the PDU set.

The first information is used to indicate a PSI related to an alone PDU, the alone PDU is a PDU that does not carry a PDU set extension header or cannot be mapped into a PDU set.

In an embodiment, the first information sent by the first network device is received during the execution of a QoS processing procedure based on the PDU set. The first information is used to indicate a PSI related to an alone PDU, the alone PDU is a PDU that does not carry a PDU set extension header or cannot be mapped into a PDU set; the first information is used to determine PDU set information corresponding to the alone PDU sent to an RAN.

To better understand the present embodiment of the present disclosure, reference may made to FIG. 7 again.

It should be noted that those skilled in the art can understand that the method provided in the embodiments of the present disclosure can be executed alone or together with some methods in the embodiments of the present disclosure or some methods in the related art.

As shown in FIG. 12, this embodiment provides a method for indicating information, the method is executed by a second network device, and the method includes step 121.

Step 121, first information is sent to a third network device.

The first information is used to indicate a PSI related to an alone PDU, the alone PDU is a PDU that does not carry a PDU set extension header or cannot be mapped into a PDU set.

In an embodiment, the first information sent by the first network device is received, the first information is used to indicate a PSI related to an alone PDU, the alone PDU is a PDU that does not carry a PDU set extension header or cannot be mapped into a PDU set. The first information is sent to the third network device.

In an embodiment, the first information sent by the first network device is received; the first information is used to indicate a PSI related to an alone PDU, and the alone PDU is a PDU that does not carry a PDU set extension header or cannot be mapped into a PDU set. A policy and charging control (PCC) rule is determined based on the first information, and the PCC rule is sent to the third network device.

It should be noted that those skilled in the art can understand that the method provided in the embodiments of the present disclosure can be executed alone or together with some methods in the embodiments of the present disclosure or some methods in the related art.

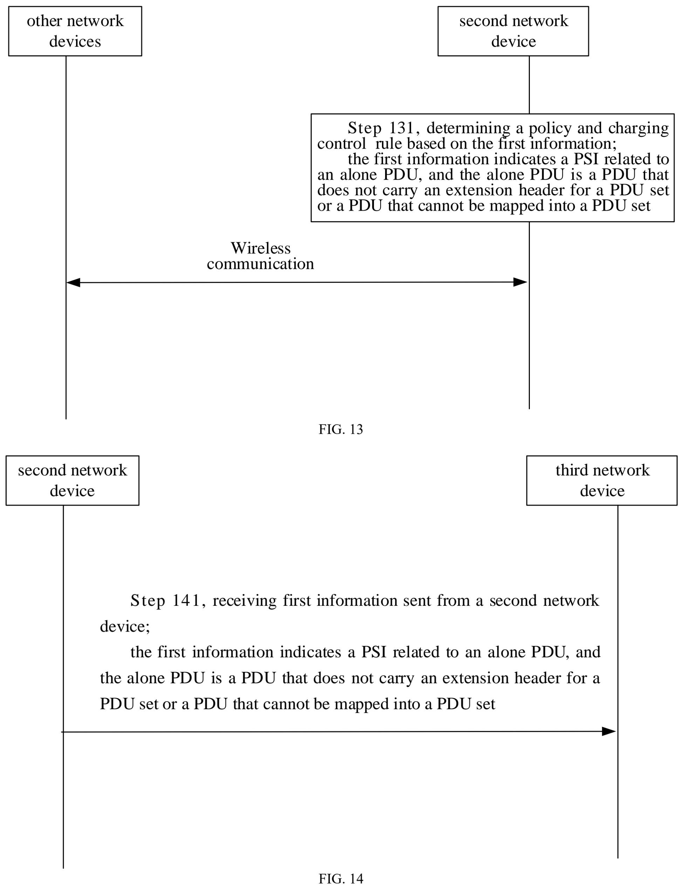

As shown in FIG. 13, this embodiment provides a method for indicating information, the method is performed by a second network device, and the method includes step 131.

Step 131, a policy and charging control (PCC) rule is determined based on first information.

The first information is used to indicate a PSI related to an alone PDU, the alone PDU is a PDU that does not carry a PDU set extension header or cannot be mapped into a PDU set.

In an embodiment, the first information sent by the first network device is received, the first information is used to indicate a PSI related to an alone PDU, the alone PDU is a PDU that does not carry a PDU set extension header or cannot be mapped into a PDU set. The PCC rule is determined based on the first information, and the PCC rule is sent to a third network device.

It should be noted that those skilled in the art can understand that the method provided in the embodiments of the present disclosure can be executed alone or together with some methods in the embodiments of the present disclosure or some methods in the related art.

As shown in FIG. 14, this embodiment provides a method for indicating information, the method is executed by a third network device, and the method includes step 141.

Step 141, first information sent by a second network device is received.

The first information is used to indicate a PSI related to an alone PDU, the alone PDU is a PDU that does not carry a PDU set extension header or cannot be mapped into a PDU set.

In the present disclosure, the PDU may also be a packet data unit, that is, in some scenarios, the "packet data unit" and "protocol data unit" in the present disclosure may be interchangeable.

In an embodiment, the PSI is used to indicate the relative importance of a PDU set relative to other PDU sets in the QoS flow. Different PSI values can be set based on the importance of the PDU set related to the alone PDU, and the first information can directly indicate the PSI value related to the alone PDU.

The alone PDU does not carry the extension header for the PDU set, so the alone PDU cannot be classified into a PDU set by an RAN. When the RAN processes the PDU set (for example, drops it), it cannot clearly determine whether to perform the corresponding processing operation on the alone PDU. In addition, even if the PDU carries the extension header for the PDU set, if the PDU cannot be mapped into the PDU set due to the lack of specific information, it may not be clear whether to perform the corresponding processing operation when the RAN processes the PDU set (for example, drops it).

In an embodiment, the PDU set associated with the alone PDU is a PDU set encapsulated based on alone PDUs.

In an embodiment, the first information sent by the second network device is received. The first information is used to indicate a PSI related to an alone PDU, and the alone PDU is a PDU that does not carry a PDU set extension header or cannot be mapped into a PDU set. The first information is used to determine PDU set information corresponding to the alone PDU sent to a fifth network device.

In an embodiment, a PCC rule sent by the second network device is received; the PCC rule is determined based on the first information; the first information is used to indicate a PSI related to an alone PDU, and the alone PDU is a PDU that does not carry a PDU set extension header or cannot be mapped into a PDU set.

In an embodiment, the PCC rule sent by the second network device is received; the PCC rule is determined based on the first information; the first information is used to indicate a PSI related to an alone PDU, and the alone PDU is a PDU that does not carry a PDU set extension header or cannot be mapped into a PDU set.

In an embodiment, the first information sent by the second network device is received; the first information is used to indicate a PSI related to an alone PDU, and the alone PDU is a PDU that does not carry a PDU set extension header or cannot be mapped into a PDU set. The first information is sent to a fourth network device. The first information is used by the fourth network device to determine PDU set information corresponding to the alone PDU and sent to the fifth network device.

It should be noted that those skilled in the art can understand that the method provided in the embodiments of the present disclosure can be executed alone or together with some methods in the embodiments of the present disclosure or some methods in the related art.

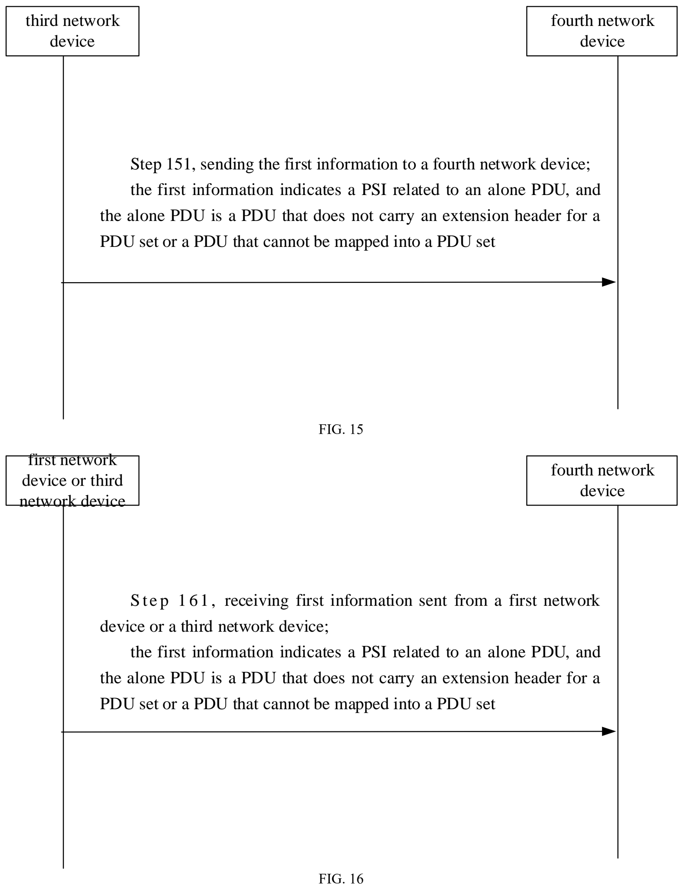

As shown in FIG. 15, this embodiment provides a method for indicating information, the method is executed by a third network device, and the method includes step 151.

Step 151, first information is sent to a fourth network device.

The first information is used to indicate a PSI related to an alone PDU, the alone PDU is a PDU that does not carry a PDU set extension header or cannot be mapped into a PDU set.

In an embodiment, the first information sent by a second network device is received; the first information is used to indicate a PSI related to an alone PDU, and the alone PDU is a PDU that does not carry a PDU set extension header or cannot be mapped into a PDU set. The first information is sent to the fourth network device. The first information is used by the fourth network device to determine PDU set information corresponding to the alone PDU and sent to a fifth network device.

In an embodiment, a PCC rule sent by the second network device is received, the PCC rule is determined based on the first information, and the first information is used to indicate a PSI related to an alone PDU, the alone PDU is a PDU that does not carry a PDU set extension header or cannot be mapped into a PDU set. The first information is sent to the fourth network device.

It should be noted that those skilled in the art can understand that the method provided in the embodiments of the present disclosure can be executed alone or together with some methods in the embodiments of the present disclosure or some methods in the related art.

As shown in FIG. 16, this embodiment provides a method for indicating information, the method is executed by a fourth network device, and the method includes step 161.

Step 161, first information sent by a first network device or a third network device is received.

The first information is used to indicate a PSI related to an alone PDU, the alone PDU is a PDU that does not carry a PDU set extension header or cannot be mapped into a PDU set.

In the present disclosure, the PDU may also be a packet data unit, that is, in some scenarios, the "packet data unit" and "protocol data unit" in the present disclosure may be interchangeable.

In an embodiment, the PSI is used to indicate the relative importance of a PDU set relative to other PDU sets in the QoS flow. Different PSI values can be set based on the importance of the PDU set related to the alone PDU, and the first information can directly indicate the PSI value related to the alone PDU.

The alone PDU does not carry the extension header for the PDU set, so the alone PDU cannot be classified into a PDU set by an RAN. When the RAN processes the PDU set (for example, drops it), it cannot clearly determine whether to perform the corresponding processing operation on the alone PDU. In addition, even if the PDU carries the extension header for the PDU set, if the PDU cannot be mapped into the PDU set due to the lack of specific information, it may not be clear whether to perform the corresponding processing operation when the RAN processes the PDU set (for example, drops it).

In an embodiment, the PDU set associated with the alone PDU is a PDU set encapsulated based on alone PDUs.

In an embodiment, the first information sent by the first network device or the third network device is received; the first information is used to indicate a PSI related to an alone PDU, and the alone PDU is a PDU that does not carry a PDU set extension header or cannot be mapped into a PDU set. The first information is used to determine PDU set information corresponding to the alone PDU and sent to a fifth network device.

In an embodiment, the fourth network device receives an RTP SDF and/or an RTCP SDF where the alone PDU is located sent by the first network device. The RTCP SDF and/or RTP SDF carries the first information. The first information is used to indicate the PSI related to the alone PDU, and the alone PDU is a PDU that does not carry a PDU set extension header or cannot be mapped into a PDU set. The first information is used to determine PDU set information corresponding to the alone PDU sent to the fifth network device.

In an embodiment, the first information sent by the first network device or the third network device is received; the first information is used to indicate a PSI related to an alone PDU, and the alone PDU is a PDU that does not carry a PDU set extension header or cannot be mapped into a PDU set. The alone PDU is identified, and the PDU set information corresponding to the alone PDU and sent to the fifth network device in the GTP-U header is determined based on the first information.

It should be noted that those skilled in the art can understand that the method provided in the embodiments of the present disclosure can be executed alone or together with some methods in the embodiments of the present disclosure or some methods in the related art.

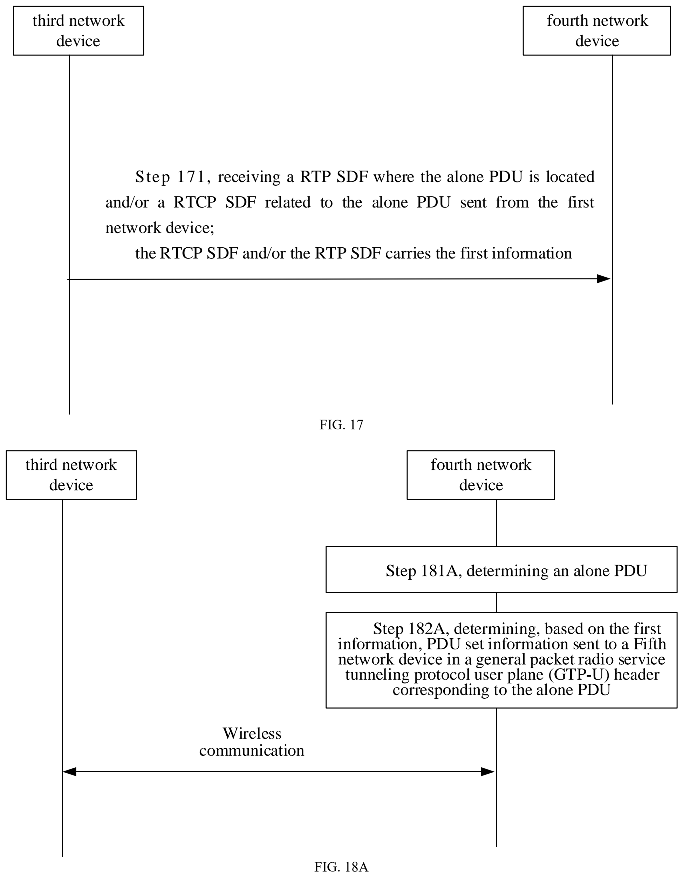

As shown in FIG. 17, this embodiment provides a method for indicating information, the method is executed by a fourth network device, and the method includes step 171.

Step 171, an RTP SDF where the alone PDU is located and/or a related RTCP SDF sent by a first network device is received.

The RTCP SDF and/or RTP SDF carries the first information.

In an embodiment, the fourth network device receives the RTP SDF where the alone PDU is located and/or the related RTCP SDF sent by the first network device. The RTCP SDF and/or the RTP SDF carry the first information. The first information is used to indicate the PSI related to the alone PDU, and the alone PDU is a PDU that does not carry a PDU set extension header or cannot be mapped into a PDU set. The first information is used to determine PDU set information corresponding to the alone PDU sent to the fifth network device.

It should be noted that those skilled in the art can understand that the method provided in the embodiments of the present disclosure can be executed alone or together with some methods in the embodiments of the present disclosure or some methods in the related art.

As shown in FIG. 18A, this embodiment provides a method for indicating information, the method is executed by a fourth network device, and the method includes steps 181a-181b.

Step 181a, an alone PDU is determined.

Step 182a: based on first information, PDU set information sent to a fifth network device in a GTP-U header corresponding to the alone PDU is determined.

In an embodiment, the fifth network device may be an access network device in an RAN.

In an embodiment, the first information sent by a first network device or a third network device is received. The first information is used to indicate a PSI related to an alone PDU, and the alone PDU is a PDU that does not carry a PDU set extension header or cannot be mapped into a PDU set. The alone PDU is determined. Based on the first information, the PDU set information sent to the RAN in the GTP-U header corresponding to the alone PDU is determined.

It should be noted that those skilled in the art can understand that the method provided in the embodiments of the present disclosure can be executed alone or together with some methods in the embodiments of the present disclosure or some methods in the related art.

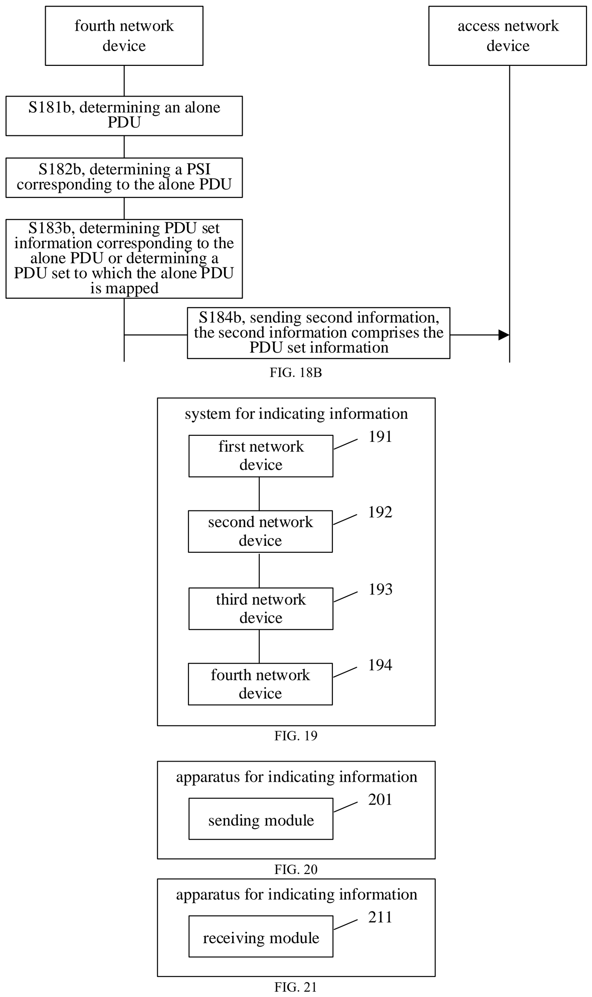

As shown in FIG. 18B, this embodiment provides a method for indicating information, the method is executed by a fourth network device, and the method includes steps 181b-184b.

Step 181b, an alone PDU is determined.

Optionally, in some embodiments, the fourth network device may determine the alone PDU. For the manner in which the fourth network device determines whether a PDU is an alone PDU reference may be made to the above description, which may not be repeated here.

For example, if the fourth network device determines that a PDU does not belong to or is not mapped into a PDU set, then the PDU is determined to be an alone PDU.

Optionally, in some embodiments, the fourth network device may receive data sent by a first network device, the data includes a plurality of PDUs, and the plurality of PDUs include at least one alone PDU.

S182b, a PSI corresponding to the alone PDU is determined.

S182b is an optional step.

Optionally, in some embodiments, the fourth network device may determine the PSI corresponding to the alone PDU in a variety of ways, which are not limited here.

For example, the fourth network device can determine the PSI through first information, and the PSI is the PSI corresponding to the alone PDU. The first information can be pre-configured locally, or obtained from the first network device, or obtained from a UDM, or obtained from a UDR, or obtained from an operation management system (OAM).

The first information may also be referred to as a first strategy.

S183b, PDU set information corresponding to the alone PDU or a PDU set mapped by the alone PDU is determined.

S183b is an optional step.

Optionally, in some embodiments, the fourth network device may determine the PDU set mapped by the alone PDU based on the first information or the PSI corresponding to the alone PDU or the PDU set information corresponding to the alone PDU.

Optionally, in some embodiments, the fourth network device may determine the PDU set information through the first information, the PDU set information is the PDU set information corresponding to the alone PDU.

Optionally, in some embodiments, the fourth network device may determine the PDU set information through the PSI, the PDU set information is the PDU set information corresponding to the alone PDU.

Optionally, in some embodiments, the fourth network device may determine a PSI in the PDU set information based on the PSI, the PDU set information is the PDU set information corresponding to the alone PDU. Other information in the PDU set information may be determined through other methods, which are not limited here.

Optionally, in some embodiments, the fourth network device may encapsulate the PDU set information corresponding to the alone PDU into a General Packet Radio Service Tunneling Protocol User Plane (GTP-U) header.

Optionally, in some embodiments, after determining the PDU set information corresponding to the alone PDU, the PDU set corresponding to the alone PDU may be determined.

Optionally, in some embodiments, after determining the PSI corresponding to the alone PDU, the PDU set corresponding to the alone PDU can be determined. For example, if the PSI of the alone PDU is PSI1, and a PSI of a certain PDU set is PSI2, if PSI1 and PSI2 have a corresponding relationship, the alone PDU has a mapping relationship with the PDU set. That is, the fourth network device can map the alone PDU into the PDU set. The corresponding relationship between PSI1 and PSI2 can mean that: PSI1 can be equal to PSI2, or F(PSI1)=PSI2, and F() is a mapping relationship.

S184b, a second message is sent, the second message includes the PDU set information.

The fourth network device sends the second message to an access network device.

S184b is an optional step.

Optionally, in some embodiments, the second message includes the alone PDU.

Optionally, in some embodiments, the second message includes a PSI corresponding to the alone PDU.

Optionally, in some embodiments, the second message includes the alone PDU, and/or the PSI corresponding to the alone PDU, and/or PDU set information corresponding to the alone PDU.

Optionally, in some embodiments, the access network device may determine a PDU set mapped by the alone PDU based on the second information.

As shown in FIG. 19, a system for indicating information is provided in an embodiment of the present disclosure. The system includes a first network device 191, a second network device 192, a third network device 193 and a fourth network device 194. The first network device 191 executes any method as executed by the first network device 191 of the present disclosure; the second network device 192 executes any method as executed by the second network device 192 of the present disclosure; the third network device 193 executes any method as executed by the third network device 193 of the present disclosure; and the fourth network device 194 executes any method as executed by the fourth network device 194 of the present disclosure.

It should be noted that those skilled in the art can understand that the method provided in the embodiments of the present disclosure can be executed alone or together with some methods in the embodiments of the present disclosure or some methods in the related art.

As shown in FIG. 20, an apparatus for indicating information is provided in an embodiment of the present disclosure, the device includes a sending module 201.

The sending module 201 is configured to send first information to a second network device or a fourth network device.

The first information is used to indicate a PSI related to an alone PDU, the alone PDU is a PDU that does not carry a PDU set extension header or cannot be mapped into a PDU set.

It should be noted that those skilled in the art can understand that the method provided in the embodiments of the present disclosure can be executed alone or together with some methods in the embodiments of the present disclosure or some methods in the related art.

As shown in FIG. 21, an apparatus for indicating information is provided in an embodiment of the present disclosure, the device includes a receiving module 211.

The receiving module 211 is configured to receive first information sent by a first network device.

The first information is used to indicate a PSI related to an alone PDU, the alone PDU is a PDU that does not carry a PDU set extension header or cannot be mapped into a PDU set.

It should be noted that those skilled in the art can understand that the method provided in the embodiments of the present disclosure can be executed alone or together with some methods in the embodiments of the present disclosure or some methods in the related art.

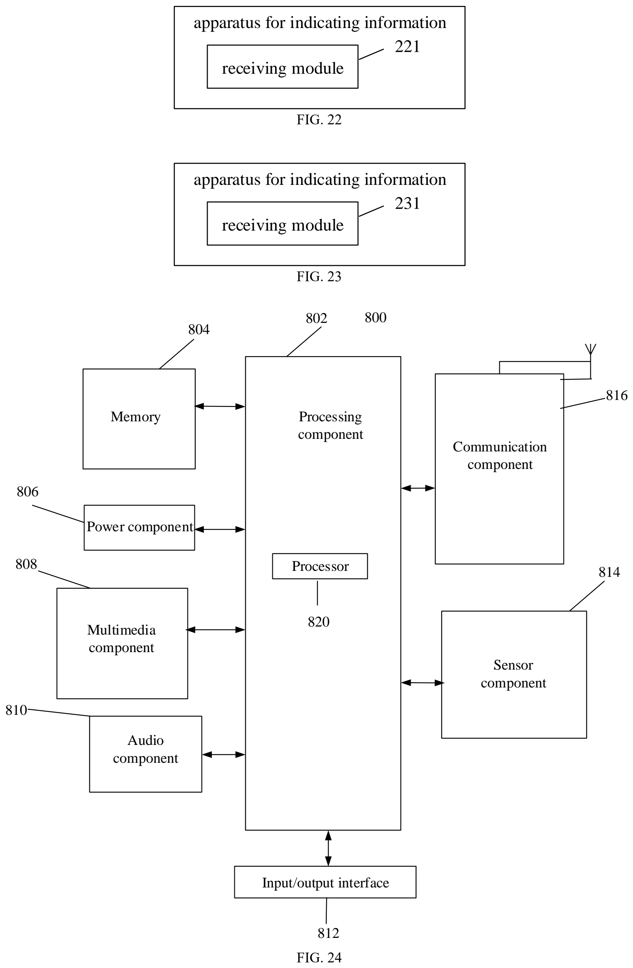

As shown in FIG. 22, an apparatus for indicating information is provided in an embodiment of the present disclosure, the device includes a receiving module 221.

The receiving module 221 is configured to receive first information sent by a second network device;

The first information is used to indicate a PSI related to an alone PDU, the alone PDU is a PDU that does not carry a PDU set extension header or cannot be mapped into a PDU set.

It should be noted that those skilled in the art can understand that the method provided in the embodiments of the present disclosure can be executed alone or together with some methods in the embodiments of the present disclosure or some methods in the related art.

As shown in FIG. 23, an apparatus for indicating information is provided in an embodiment of the present disclosure, the device includes a receiving module 231.

The receiving module 231 is configured to receive first information sent by a first network device or a third network device;

The first information is used to indicate a PSI related to an alone PDU, the alone PDU is a PDU that does not carry a PDU set extension header or cannot be mapped into a PDU set.

Embodiments of the present disclosure provide an apparatus for indicating information, the device includes a determination module 241.

The determination module 241 is configured to determine an alone PDU, and/or determine a PSI corresponding to the alone PDU, and/or determine PDU set information corresponding to the alone PDU, and/or determine a PDU set to which the alone PDU is mapped.

The determination module may also be configured to perform other steps, as described above, which may not be repeated here. For example, some of the steps in FIG. 18B may be performed by the determination module.

The indicating device may further include a sending module 242, which may receive first data including an alone PDU, and/or may send a PSI corresponding to the alone PDU, PDU set information corresponding to the alone PDU, a PDU set corresponding to the alone PDU, etc.

It should be noted that those skilled in the art may understand that the methods provided in the embodiments of the present disclosure may be executed separately, or may also be executed together with some methods in the embodiments of the present disclosure or some methods in the related art.

A communication device is provided in the embodiments of the present disclosure. The communication device includes:
a processor;
a memory configured to store instructions executable by the processor.

The processor is configured to implement the method in any of the embodiments in the present disclosure when executing the instructions.

The processor may include various types of storage medium, and the storage medium is a non-transitory computer storage medium, and may continue to memorize the information stored thereon after the communication device is powered down.

The processor may be connected to the memory via a bus or the like, and is configured to read executable programs stored on the memory.

According to the embodiments of the present disclosure, a computer storage medium with a computer executable program stored thereon is further provided. The method of any embodiment of the present disclosure is implemented when the executable program is executed by the processor.

With regard to the apparatus in the above embodiments, the specific way in which each module performs the operation has been described in detail in the embodiments of the method and will not be elaborated here.

As shown in FIG. 24, a structure of a terminal is illustrated in an embodiment of the present disclosure.

Referring to the terminal 800 shown in FIG. 24, the terminal 800 is provided in the embodiments. For example, the terminal may specifically be a mobile phone, a computer, a digital broadcasting terminal, a messaging device, a game console, a tablet device, a medical device, a fitness equipment, a personal digital assistant, etc.

As illustrated in FIG. 24, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the whole operation of the terminal 800, such as the operations related to display, phone call, data communication, camera operations and recording operations. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store various types of data to support the operation of the device 800. Examples of the data include the instructions of any applications or methods operated on the terminal 800, contact data, phone book data, messages, pictures, videos, etc. The memory 804 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power supply for various components of the terminal 800. The power supply component 806 may include a power supply management system, one or more power supplies, and other components related to generating, managing and distributing power for the terminal 800.

The multimedia component 808 includes a screen for providing an output interface between the terminal 800 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of the touching or sliding action, but also detect the duration and pressure related to the touching or sliding operation. In some embodiments, the multimedia component 808 includes a front camera and/or a rear camera. When the terminal 800 is in an operation mode, such as a shooting mode or a video mode, the front camera or the rear camera may receive the external multimedia data. Each front camera and rear camera may be a fixed optical lens system or an optical lens system with focal length and optical zoom capacity.

The audio component 810 is configured to output and/or input signals. For example, the audio component 810 includes a microphone (MIC). When the terminal 800 is in the operation mode, such as a call mode, a recording mode, and a speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface between the processing component 802 and a peripheral interface module, and the peripheral interface module may be a keyboard, a click wheel, a button, etc. The button may include but not limited to a home button, a volume button, a start button and a lock button.

The sensor component 814 includes one or more sensors, configured to provide various aspects of status assessment for the terminal 800. For example, the sensor component 814 may detect the on/off state of the device 800 and the relative positioning of the components. For example, the components are the display and the keypad of the terminal 800. The sensor component 814 may also detect the location change of the terminal 800 or a component of the terminal 800, the presence or absence of contact between the user and the terminal 800, the orientation or acceleration/deceleration of the terminal 800, and the temperature change of the terminal 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 may be configured for the convince of wired or wireless communication between the terminal 800 and other devices. The terminal 800 may access wireless networks based on communication standard, such as WiFi, 2G or 3G, or their combination. In an embodiment, the communication component 816 receives broadcast signals or broadcast-related information from an external broadcast management system via a broadcast channel. In an embodiment, the communication component 816 further includes a near field communication (NFC) module to facilitate short-range communication. For example, an NFC module may be implemented based on radio frequency identification (RFID) technology, infrared data association (IRDA) technology, ultra-wideband (UWB) technology, bluetooth (BT) technology and other technologies.

In an embodiment, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an embodiment, a non- transitory computer readable storage medium is further provided which includes instructions, such as the memory 804 including instructions, in which the instructions may be executed by the processor 820 of the terminal 800 to complete the above methods. For example, the non-transitory computer readable storage medium may be a ROM, a random access memory (RAM), a CD-ROM, a magnetic tape, a floppy disk, an optical data storage device, etc.

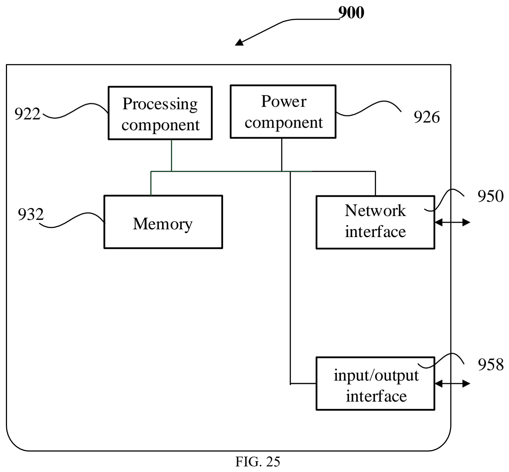

As shown in FIG. 25, a structure of a base station is illustrated in an embodiment of the present disclosure. For example, the base station 900 may be provided as a network side device. Referring to FIG. 25, the base station 900 includes a processing component 922, which further include one or more processors, and memory resources represented by the memory 932, which are configured to store instructions, such as an application, executed by the processing component 922. The application stored in the memory 932 may include one or more modules each of which corresponds to a set of instructions. In addition, the processing component 922 is configured to execute instructions, to execute any of the methods described above performed by the base station.

The base station 900 may further include a power supply component 926 configured to execute power management of the base station 900, a wired or wireless network interface 950 configured to connect the base station 900 to a network, and an input/output (I/O) interface 958. The base station 900 may operate an operating system stored in the memory 932, for example, Windows Server TM, Mac OS XTM, Unix^{™}, Linux^{™}, FreeBSD^{™} or the like.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as examples only, and the true scope and spirit of the present disclosure are defined by the appended claims.

It should be understood that the present disclosure is not limited to the precise structure described above and shown in the drawings, and various modifications and changes may be made without departing from its scope. The scope of the present disclosure is limited by the appended claims.

## Claims

1. A method for indicating information, performed by a first network device, comprising:
sending first information to a second network device or a fourth network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

2. The method according to claim 1, wherein sending the first information to the second network device comprises one of:
sending the first information to the second network device during a session creating request procedure performed by the first network device;
sending the first information to the second network device during an application session update request procedure performed by the first network device; or
sending the first information to the second network device during execution of a QoS processing procedure based on the PDU set.

3. The method according to claim 1, wherein sending the first information to the fourth network device comprises:
sending a real-time transport protocol (RTP) service data flow (SDF) where the alone PDU is located and/or a real-time transport control protocol (RTCP) SDF related to the alone PDU to the fourth network device;
wherein the RTCP SDF and/or the RTP SDF carries the first information.

4. The method according to claim 1, wherein the first network device comprises an application function (AF), the second network device comprises a policy control function (PCF), and/or the fourth network device comprises a user plane function (UPF).

5. A method for indicating information, performed by a second network device, comprising:
receiving first information sent from a first network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

6. The method according to claim 5, wherein receiving the first information sent from the first network device comprises one of:
receiving the first information sent from the first network device during a session creating request procedure performed by the first network device;
receiving the first information sent from the first network device during an application session update request procedure performed by the first network device; or
receiving the first information sent from the first network device during execution of a QoS processing procedure based on the PDU set.

7. The method according to claim 5, wherein the first network device comprises an application function (AF), and/or the second network device comprises a policy control function (PCF).

8. The method according to claim 5, further comprising:
sending the first information to a third network device.

9. The method according to claim 8, further comprising:
determining a policy and charging control (PCC) rule based on the first information;
wherein sending the first information to the third network device comprises:
sending the PCC rule to the third network device.

10. The method according to claim 8, wherein the third network device comprises a session management function (SMF).

11. A method for indicating information, performed by a third network device, comprising:
receiving first information sent from a second network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

12. The method according to claim 11, wherein receiving the first information sent from the second network device comprises:
receiving a policy and charging control (PCC) rule sent from the second network device;
wherein the PCC rule is determined based on the first information.

13. The method according to claim 11, further comprising:
sending the first information to a fourth network device.

14. The method according to claim 13, wherein the fourth network device comprises a user plane management function (UPF).

15. The method according to claim 11, wherein the second network device comprises a policy control function (PCF), and/or the third network device comprises a session management function (SMF).

16. A method for indicating information, performed by a fourth network device, comprising:
receiving first information sent from a first network device or a third network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

17. The method according to claim 16, wherein receiving the first information sent from the first network device comprises:
receiving a real-time transport protocol (RTP) service data flow (SDF) where the alone PDU is located and/or a real-time transport control protocol (RTCP) SDF related to the alone PDU sent from the first network device;
wherein the RTCP SDF and/or the RTP SDF carries the first information.

18. The method according to claim 16, further comprising:
determining an alone PDU; and
determining, based on the first information, PDU set information sent to a radio access network (RAN) in a general packet radio service tunneling protocol user plane (GTP-U) header corresponding to the alone PDU.

19. The method according to claim 16, wherein the first network device comprises an application function (AF), the third network device comprises a session management function (SMF), and/or the fourth network device is an SMF.

20. A method for indicating information, performed by a system, comprising:
sending, by a first network device, first information to a second network device or a fourth network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

21. The method according to claim 20, further comprising:
determining, by the second network device, a policy and charging control (PCC) rule based on the first information; and
sending, by the second network device, the PCC rule to a third network device.

22. The method according to claim 21, further comprising:
determining the first information based on the PCC rule;
sending, by the third network device, the first information to the fourth network device.

23. The method according to claim 22, further comprising:
determining, by the fourth network device, an alone PDU, and determining, based on the first information by the fourth network device, PDU set information sent to a radio access network (RAN) in a general packet radio service tunneling protocol user plane (GTP-U) header corresponding to the alone PDU.

24. An apparatus for indicating information, comprising:
a sending module, configured to send the first information to a second network device or a fourth network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

25. An apparatus for indicating information, comprising:
a receiving module, configured to receive first information sent from a first network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

26. An apparatus for indicating information, comprising:
a receiving module, configured to receive first information sent from a second network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

27. An apparatus for indicating information, comprising:
a receiving module, configured to receive first information sent from a first network device or a third network device;
wherein the first information indicates a packet data unit set importance (PSI) related to an alone packet data unit (PDU), and the alone PDU is a PDU that does not carry an extension header for a PDU set or a PDU that cannot be mapped into a PDU set.

28. A system, comprising: a first network device, a second network device, a third network device and a fourth network device; wherein the first network device is configured to execute the method according to any one of claims 1-4; the second network device is configured to execute the method according to any one of claims 5-10; the third network device is configured to execute the method according to any one of claims 11-15; and the fourth network device is configured to execute the method according to any one of claims 16 to 19.

29. A communication device, comprising:
one or more processors;
wherein the processor is configured to call instructions to cause the communication device to perform the method for indicating information according to any one of claims 1 to 4, the method for indicating information according to any one of claims 5 to 10, the method for indicating information according to any one of claims 11 to 15, any one of claims 16 to 19, or any one of claims 31 to 43.

30. A storage medium storing instructions that, when executed on a communication device, the communication device is caused to perform the method for indicating information according to any one of claims 1 to 4, any one of claims 5 to 10, any one of claims 11 to 15, any one of claims 16 to 19, or any one of claims 31 to 43.

31. A method for indicating information, performed by a fourth network device, comprising:
determining an alone packet data unit (PDU), wherein the alone PDU is a PDU that does not carry an extension header for a PDU set or a PDU that cannot be mapped into a PDU set; and
determining a packet data unit set importance (PSI) based on first information, wherein the PSI corresponds to the alone PDU, the first information is information pre-configured locally at the fourth network device, or the first information is obtained from a unified data management (UDM), or the first information is obtained from a unified data repository (UDR), or the first information is obtained from an operation administration and maintenance (OAM).

32. The method according to claim 31, further comprising:
receiving the first information sent from the UDM; or
receiving the first information sent from the UDR; or
receive the first information sent from the OAM.

33. The method according to claim 31 or 32, further comprising:
determining PDU set information corresponding to the alone PDU based on the PSI.

34. The method according to claim 31 or 32, further comprising:
determining PDU set information corresponding to the alone PDU based on the first information.

35. The method according to claim 34 or 35, further comprising:
encapsulating the PDU set information into a general packet radio service tunneling protocol user plane (GTP-U) header.

36. The method according to any one of claims 31 to 35, further comprising:
determining a PDU set to which the alone PDU is mapped based on the PSI.

37. The method of claim 36, wherein determining the PDU set to which the alone PDU is mapped based on the PSI comprises:
determining the PDU set to which the alone PDU is mapped based on the PSI and a PSI of the PDU set.

38. The method according to claim 37, wherein the alone PDU comprises a first PDU, and the PDU set comprises a first PDU set; the PSI corresponding to the alone PDU is a first PSI, PDU set information of the first PDU set is a second PSI, the first PSI corresponds to the second PSI, and the first PDU is mapped to the first PDU set.

39. The method according to claims 33-38, further comprising:
sending second information to an access network device, wherein the second information comprises the PDU set information.

40. The method according to any one of claims 31-39, further comprising:
receiving the alone PDU sent from a first network device.

41. The method according to claim 40, wherein the first network device is an application function (AF), or the first network device is a server corresponding to an AF.

42. The method according to claim 40 or 41, wherein receiving the alone PDU sent from the first network device comprises:
receiving first data sent from the first network device; and
determining the alone PDU from the first data.

43. The method according to any one of claims 31-42, wherein the fourth network device is a user plane management function (UPF).

44. An apparatus for indicating information, comprising:
a determining module configured to determine an alone packet data unit (PDU) and determine a packet data unit set importance (PSI);
wherein the alone PDU is a PDU that does not carry an extension header for a PDU set or a PDU that cannot be mapped into a PDU set; the PSI corresponds to the alone PDU, the first information is information pre-configured locally at the fourth network device, or the first information is obtained from a unified data management (UDM), or the first information is obtained from a unified data repository (UDR), or the first information is obtained from an operation administration and maintenance (OAM).
